# EUROPEAN PATENT SPECIFICATION

(11) **EP 3 885 948 B1**
(45) Date of publication and mention of the grant of the patent: **12.11.2025**
(21) Application number: 19906997.2
(22) Date of filing: 12.12.2019
(51) Int. Cl.: G06F 21/36, G06F 21/34, G06F 21/45, G06F 3/041, G06F 3/04883, G06F 3/04892

(54) **ELECTRONIC DEVICE AND METHOD FOR RELEASING LOCK MODE BY USING CONTROLLER DEVICE**
ELEKTRONISCHE VORRICHTUNG UND VERFAHREN ZUR FREIGABE EINES VERRIEGELUNGSMODUS DURCH VERWENDUNG EINER STEUERGERÄTEVORRICHTUNG
DISPOSITIF ÉLECTRONIQUE ET PROCÉDÉ DE LIBÉRATION DE MODE DE VERROUILLAGE AU MOYEN D'UN DISPOSITIF DE COMMANDE

(30) Priority: 31.12.2018 KR 20180173359
(43) Date of publication of application: 29.09.2021
(73) Proprietor: Samsung Electronics Co., Ltd., Suwon-si, Gyeonggi-do 16677 (KR)
(72) Inventor: CHAE, Sangwon, Suwon-si, Gyeonggi-do 16677 (KR); LEE, Jungeun, Suwon-si, Gyeonggi-do 16677 (KR)
(74) Representative: HGF
(86) International application number: PCT/KR2019/017565
(87) International publication number: WO 2020/141752

(56) References cited:
- KR-A- 20130 008 173
- KR-A- 20140 034 100
- KR-A- 20160 012 008
- KR-A- 20170 006 592
- KR-B1- 101 815 365
- US-A1- 2007 155 322
- US-A1- 2012 146 907
- US-A1- 2014 317 499

## Description

### [Technical Field]

Embodiments disclosed in the disclosure relate to a technology for releasing a locking mode using a control device.

### [Background Art]

An electronic device may be set to be in a locking mode such that only an authenticated user is capable of using the electronic device. To release the locking mode of the electronic device, it may be required to input a pattern or a password.
US20140317499 relates to a portable terminal and a method for controlling locking and unlocking of a touch screen. The method of unlocking the portable terminal includes displaying a three dimensional (3D) lock screen recognized in 3D on a screen and determining a locking state of the portable terminal based on a spatial gesture input when the spatial gesture input is detected on the 3D lock screen.
KR20130008173 relates to a portable terminal and a control method thereof provided to lock an external PC by using NFC (Near Field Communication) and a portable terminal.

### [Disclosure]

### [Technical Problem]

When the electronic device and the control device are connected to each other, a user may operate the electronic device by using the control device. When the locking mode is set in the electronic device, the user may experience inconvenience of directly operating the electronic device other than the control device in order to release the locking mode of the electronic device.

Various embodiments of the disclosure may provide a method of releasing a locking mode of an electronic device using a control device when an electronic device is connected to a control device, and an electronic device supporting the same.

### [Technical Solution]

According to an embodiment of the disclosure, an electronic device includes a processor, a touch screen display electrically connected to the processor, an interface connected to a control device to transmit a first controller input signal received from the control device to the processor, a memory that stores first unlocking information to release a locking mode of the electronic device based on a touch input that is input through the touch screen display, wherein the memory stores instructions that, when executed, cause the processor to, when the locking mode is set to the electronic device and the control device is connected to the electronic device, compare the first controller input signal with the first unlocking information, and release the locking mode of the electronic device when the first controller input signal matches the first unlocking information.

In addition, according to an embodiment of the disclosure, a method includes, when the electronic device is in a locking mode and the control device is connected to the electronic device, storing first unlocking information that allows the locking mode of the electronic device to be released, based on a touch input that is input through a touch screen display of the electronic device, receiving a controller input signal from the control device, comparing the controller input signal with the first unlocking information, and releasing the locking mode of the electronic device when the controller input signal matches the first unlocking information.

In addition, according to an embodiment of the disclosure, a storage medium includes when the electronic device is in a locking mode and the control device is connected to the electronic device, storing first unlocking information that allows the locking mode of the electronic device to be released, based on a touch input that is input through a touch screen display of the electronic device, receiving a controller input signal from the control device, comparing the controller input signal with the first unlocking information, and releasing the locking mode of the electronic device when the controller input signal matches the first unlocking information.

### [Advantageous Effects]

According to the embodiments of the disclosure, by releasing the lock mode of the electronic device by using the controller device, the user may release the lock mode of the electronic device by using the controller device without directly operating the electronic device.

According to the embodiments of the disclosure, while the user operates the electronic device by using the controller device, the user may input the same information as the information for releasing the lock mode of the electronic device to the electronic device by using the controller device, so that it is possible to release the lock mode of the electronic device by using the controller device.

In addition, various effects that are directly or indirectly understood through the disclosure may be provided. The scope of the invention is defined by the independent claims.

### [Description of Drawings]

FIG. 1 is a block diagram illustrating an electronic device in a network environment according to various embodiments.
FIG. 2 is a block diagram of an electronic device according to an embodiment.
FIG. 3 is a flowchart illustrating a method of allowing the processor to release a locking mode of the electronic device by using the control device according to an embodiment.
FIGS. 4A, 4B, 4C, 5A and 5B are diagrams each illustrating a method of allowing the processor to generate the first unlocking information and storing the first unlocking information in the memory according to an embodiment.
FIGS. 6A, 6B, 6C, 7A, 7B, 7C and 7D are diagrams each illustrating the processes of comparing the first controller input signal with the first unlocking information and releasing the locking mode of the electronic device by the processor according to an embodiment.
FIGS. 8A, 8B, 8C and 8D are diagrams illustrating a process in which the processor according to an embodiment compares the first controller input signal with the first unlocking information to maintain the locking mode of the electronic device.
FIG. 9 is a block diagram of an electronic device according to an embodiment.
FIG. 10 is a flowchart illustrating a method of releasing a locking mode of the electronic device using the control device by the processor according to an embodiment.
FIG 11 is a diagram illustrating a first background screen display signal according to an embodiment.
FIGS. 12A, 12B and 12C are diagrams each illustrating a second pointer display signal and a second pointer movement signal according to an embodiment.
FIG. 13 is a flowchart illustrating a method of releasing a locking mode of the electronic device by using the control device by the processor according to an embodiment.
FIG. 14 is a diagram illustrating a method of generating the second unlocking information and storing the second unlocking information in the memory by the processor according to an embodiment.
FIG. 15 is a diagram illustrating the second background screen display signal according to an embodiment.
FIGS. 16A, 16B and 16C are diagrams each illustrating that the processor compares the second controller input signal with the second unlocking information according to an embodiment.
FIG. 17 is a diagram illustrating a method of generating the second unlocking information and storing the second unlocking information in the memory by the processor according to an embodiment.
FIG. 18 is a diagram illustrating that a processor 220 compares the second controller input signal with the second unlocking information according to an embodiment

With regard to description of drawings, the same or similar elements may be marked by the same or similar reference numerals.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope and spirit of the disclosure.

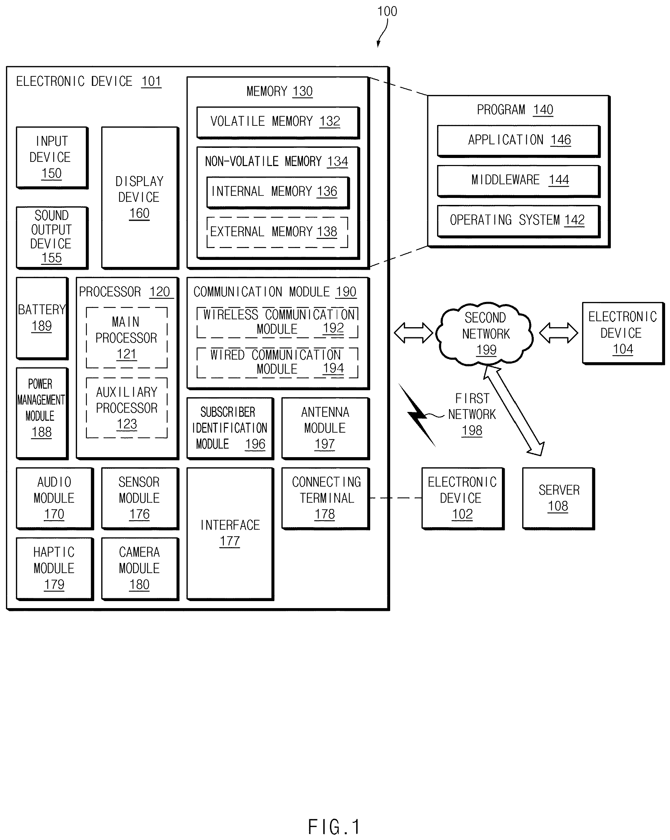

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

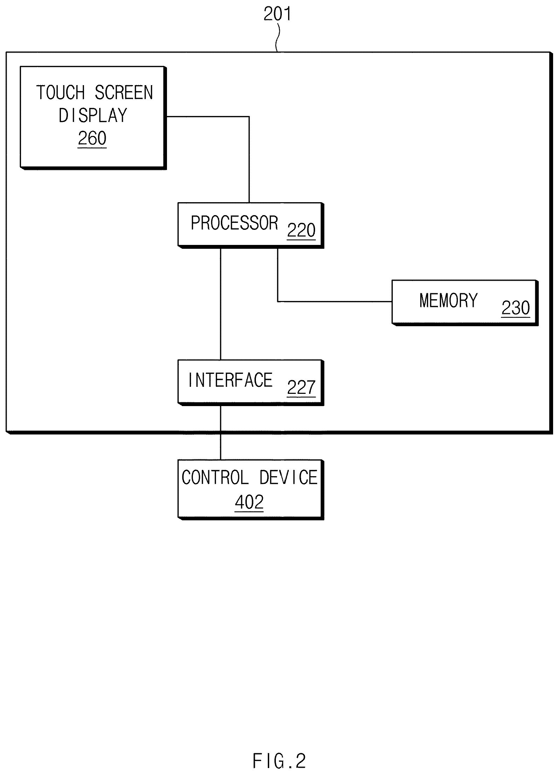

FIG. 2 is a block diagram of an electronic device 201 according to an embodiment.

Referring to FIG. 2, the electronic device 201 may include a processor 220, a memory 230, a touch screen display 260, and an interface 277.

The touch screen display 260 (e.g., the display device 160 in FIG. 1) may receive a touch input from a user. The touch screen display 260 may be electrically connected to the processor 220 (e.g., the processor 120 in FIG. 1). The touch screen display 260 may transmit a touch input input through the touch screen display 260 to the processor 220.

The touch screen display 260 may visually provide various types of information. For example, the touch screen display 260 may receive a first pointer display signal and a first pointer movement signal generated by the processor 220. When the touch screen display 260 receives the first pointer display signal and the first pointer movement signal from the processor 220, the touch screen display 260 may display the pointer corresponding to the first controller input signal of a control device 402 and display the movement path of the pointer.

The interface 277 (e.g., the interface 177 in FIG. 1) may be connected to the control device 402. The interface 277 may transmit the first controller input signal received from the control device 402 to the processor 220.

The processor 220 (e.g., the processor 120 in FIG. 1) may be operatively connected to the touch screen display 260, the interface 277, and the memory 230 to control the overall operation of the electronic device 201. For example, the processor 220 may correspond to a processing circuit that controls other components electrically connected to the processor 220 and performs an operation in the electronic device 201.

The processor 220 may generate first unlocking information based on a touch input that is input through the touch screen display 260. The processor 220 may store the generated first unlocking information in the memory 230. The first unlocking information may be information for releasing the locking mode of the electronic device 201.

The processor 220 may receive a first controller input signal through the interface 277. The processor 220 may transmit a first pointer movement signal and a first pointer display signal to the touch screen display 260 based on the received first controller input signal. The processor 220 may compare the first controller input signal with the first unlocking information stored in the memory 230. When the locking mode is set in the electronic device 201, the processor 220 may release the locking mode of the electronic device 201 when the first controller input signal matches the first unlocking information.

The memory 230 (e.g., the memory 130 in FIG. 1) may store commands, information, or data related to operations of components included in the electronic device 201. For example, the memory 230 may store instructions that, when executed, cause the processor 220 to perform various operations described in the disclosure. The memory 230 may store information (e.g., the first unlocking information) capable of releasing the locking mode of the electronic device 201.

The control device 402 may be connected to the electronic device 201. For example, the control device 402 may be electrically connected to the processor 220 through the interface 277. The control device 402 may be connected to the electronic device 201 to operate the electronic device 201. For example, when the control device 402 and the electronic device 201 are connected to each other, the user may operate the control device 402 to execute various instructions on the electronic device 201. The first controller input signal received by the processor 220 from the control device 402 may be a signal generated by manipulation of the control device 402. For example, when a user manipulates the control device 402, the first controller input signal may be input to the processor 220 in response to the manipulation of the control device 402.

In some embodiments, the control device 402 may be a device including at least one of a joystick and an input button. In some embodiments, the control device 402 may be a mouse.

The electronic device 201 according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device 201 is not limited to those described above.

Hereinafter, a method of allowing the processor 220 to release the locking mode of the electronic device 201 by using the control device 402 according to an embodiment will be described with reference to FIGS. 2 to 8D. For clarity of explanation, overlapping ones with those described above will be simplified or omitted.

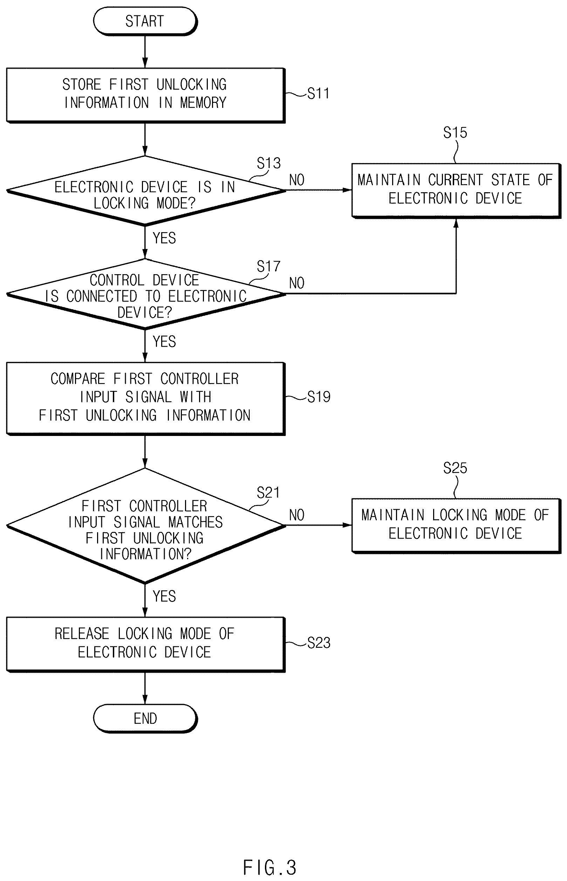

FIG. 3 is a flowchart illustrating a method of allowing the processor 220 to release a locking mode of the electronic device 201 by using the control device 402 according to an embodiment. It is assumed that the operation of FIG. 3 is performed by the electronic device 201 of FIG. 2. The operation of FIG. 3 described as being performed by the electronic device 201 may be implemented with instructions that may be performed (or executed) by the processor 220 of the electronic device 201. For example, the instructions may be stored in a computer recording medium or the memory 230 of the electronic device 201 shown in FIG. 2.

Referring to FIGS. 2 and 3, in operation S11, the processor 220 may store the first unlocking information in the memory 230. The processor 220 may generate the first unlocking information which is information for releasing the locking mode of the electronic device 201, based on a touch input which is input through the touch screen display 260.

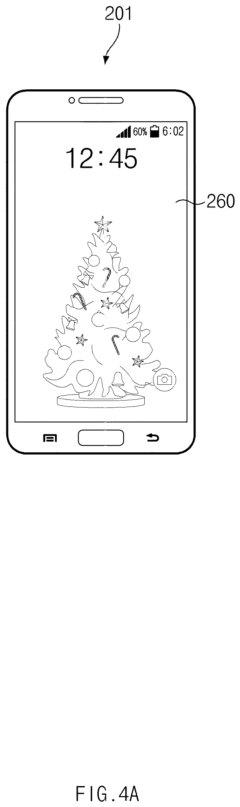

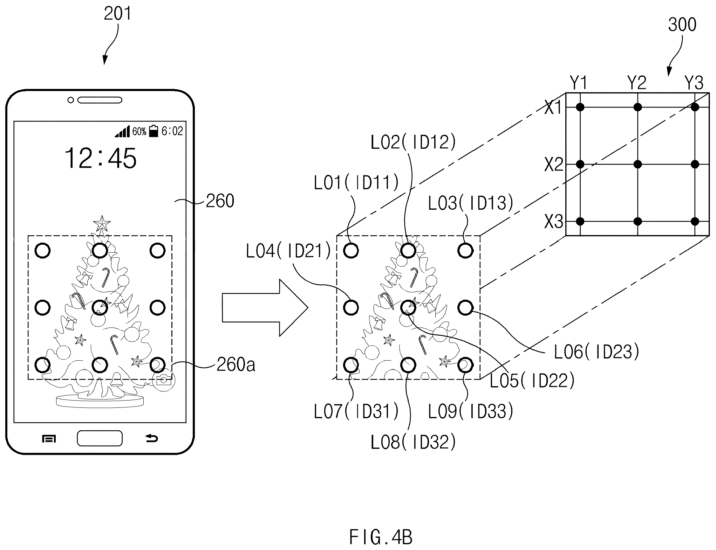

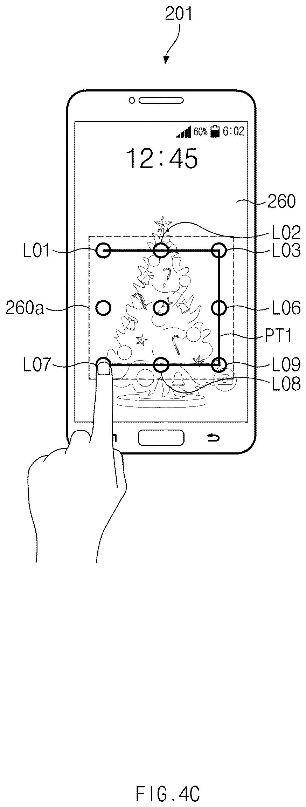

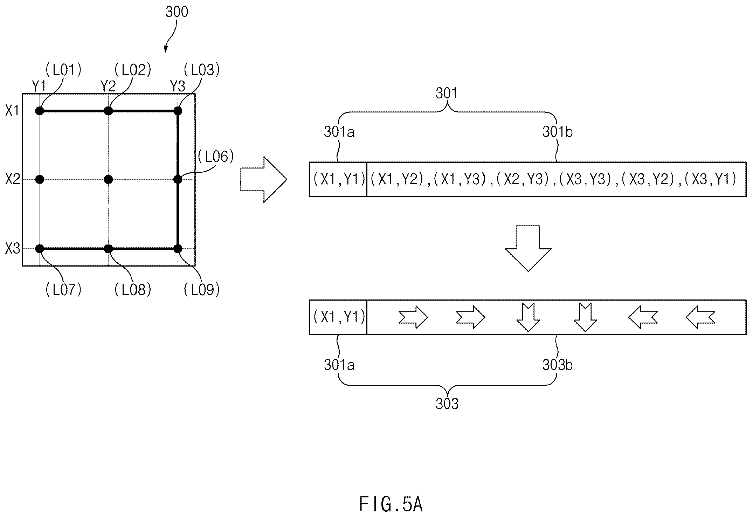

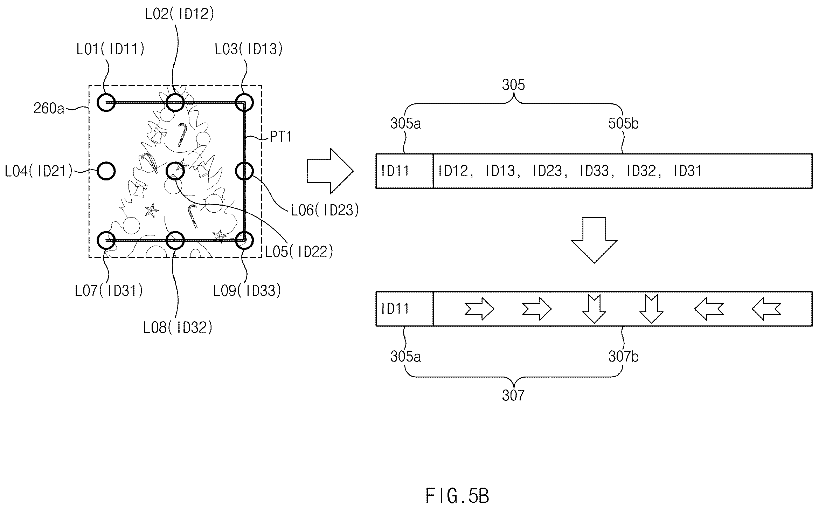

The operation S11 of FIG. 3 will be described with reference to FIGS. 4A to 5B. FIGS. 4A, 4B, 4C, 5A, and 5B are diagrams each illustrating a method of allowing the processor 220 to generate the first unlocking information and storing the first unlocking information in the memory 230 according to an embodiment.

First, referring to FIG. 4A, the locking mode may be set in the electronic device 201. When the locking mode is set in the electronic device 201, the processor 220 displays a screen that may inform the user that the locking mode is currently set on the electronic device 201 through the touch screen display 260.

Referring to FIG. 4B, the processor 220 may display a first lock object area 260a on the touch screen display 260. For example, when a user applies a touch input to an arbitrary area of the touch screen display 260, the processor 220 may display the first lock object area 260a on the touch screen display 260. The first lock object area 260a may be a partial area of the touch screen display 260. In the drawing, the first lock object area 260a is shown to be displayed at a specific position of the touch screen display 260, but the embodiment is not limited thereto. For example, the first lock object area 260a may be displayed at an arbitrary position of the touch screen display 260, which is different from that illustrated.

For example, the first lock object area 260a may include first to ninth lock objects LO1 to LO9. Each of the first to ninth lock objects LO1 to LO9 may have a unique ID. For example, IDs of the first to ninth lock objects LO1 to LO9) may be ID11, ID12, ID13, ID21, ID22, ID23, ID31, ID32 and ID33, respectively. The processor 220 may know unique ID information of each of the first to ninth lock objects LO1 to LO9. Furthermore, the processor 220 may know the location information of each of the first to ninth lock objects LO1 to LO9. For example, the first lock object area 260a may correspond to a coordinate system 300. For example, the coordinates of the first lock object LO1 may be (X1, Y1), and the coordinates of the sixth lock object LO6 may be (X2, Y3).

Referring to FIG. 4C, the processor 220 may receive a touch input from the touch screen display 260. In some embodiments, the touch input may be input in the form of a pattern. In some embodiments, the touch input may be input in the form of a password. Hereinafter, it is assumed that the touch input has the same shape as a pattern PT1.

For example, when the first lock object area 260a is displayed on the touch screen display 260 by the processor 220, the user may apply a touch input to the first lock object area 260a to release the locking mode of the electronic device 201. For example, a user may input the pattern PT1 having a specific shape to the first lock object area 260a in a touch scheme. The pattern PT1 may overlap in the order of the first, second, third, sixth, ninth, eighth, and seventh lock objects LO1, LO2, LO3, LO6, LO9, LO8 and LO7.

The pattern PT1, which is a touch input, may be an input for releasing the locking mode of the electronic device 201. In other words, when the pattern PT1, which is a touch input, is received, the processor 220 may release the locking mode of the electronic device 201.

When the user sets a password for releasing the locking mode of the electronic device 201, the pattern PT1, which is a touch input, may be set by the user and may be stored in the memory 230 while being included in the first unlocking information. Accordingly, when a touch input, which is different from the pattern PT1 which is a touch input, is input by the user, the processor 220 may not release the locking mode of the electronic device 201.

The processor 220 may generate touch input information corresponding to the pattern PT1 that is a touch input. The processor 220 may generate at least one of touch input coordinates 301, first button manipulation information 303, touch input ID information 305, and second button manipulation information 307 as the touch input information, and may allow it to be included in the first unlocking information.

Referring to FIG. 5A, the processor 220 may generate the touch input coordinates 301 as the touch input information based on the pattern PT1 that is a touch input. For example, the processor 220 may generate the touch input coordinates 301 by allowing the pattern PT1 that is a touch input to correspond to the coordinate system 300. The touch input coordinates 301 may include a first initial position coordinates 301a and a first coordinate sequence 301b.

The first initial position coordinates 301a of the touch input coordinates 301 may include coordinate information (e.g., (X1, Y1)) of a lock object (e.g., the first lock object LO1) corresponding to the initial position at which the pattern PT1, which is the touch input, starts. Unlike illustrated, when the initial position at which the touch input for releasing the locking mode of the electronic device 201 is started is the fourth lock object LO4, the first initial position coordinates 301a may be stored as (X2, Y1).

The first coordinate sequence 301b of the touch input coordinates 301 may include coordinates of a lock object overlapping with the pattern PT1 that is a touch input and order information of the overlapping lock object. For example, after the first lock object LO1 corresponding to the initial position where the pattern PT1, which is the touch input, starts, the lock object first overlapping with the pattern PT1 is the second lock object LO2. Next, the lock object secondly overlapped with the pattern PT1 that is a touch input is the third lock object LO3. In such a manner, until the pattern PT1, which is the touch input, is terminated, the coordinates and order of the lock objects overlapping with the pattern PT1 may be stored in the first coordinate sequence 301b. Accordingly, because the pattern PT1, which is the touch input, overlaps, after the first lock object LO1 which is the initial position, with the second lock object LO2, the third lock object LO3, the sixth lock object LO6, the ninth lock object LO9, the eighth lock object LO8, and the seventh lock object LO7 in this order, the processor 220 may generate the first coordinate sequence 301b of '(X1, Y2), (X1, Y3), (X2, Y3), (X3, Y3), (X3, Y2), (X3, Y1)'.

In some embodiments, the processor 220 may further generate the first button manipulation information 303 corresponding to the touch input coordinates 301 as the touch input information. The first button manipulation information 303 may include first initial position coordinates 301a and a first button manipulation sequence 303b. The first initial position coordinates 301a of the first button manipulation information 303 may be the same as the first initial position coordinates 301a of the touch input coordinates 301.

The processor 220 may generate the first button manipulation sequence 303b by allowing the first coordinate sequence 303b and the first coordinate sequence 301b to correspond to each other. The first button manipulation sequence 303b may indicate an operation order of the input button of the control device 402 when the control device 402 is connected to the electronic device 201. The processor 220 may determine in which order the input button of the control device 402 should be operated in order to input each coordinates corresponding to the first coordinate sequence 301b from the first initial position coordinates 301a. For example, in order to input the next coordinates of (X1, Y2) from the first initial position coordinates 301a of (X1, Y1), the processor 220 may determine that a signal indicating a 'right direction' should be received by the input button of the control device 402 and may allow the signal to include in the first button manipulation sequence 303b. In addition, for example, in order to input the next coordinates (X1, Y3) of the coordinates (X1, Y2), the processor 220 may determine that a signal indicating a 'right direction' should be received by the input button of the control device 402, and allow the signal to be included in the first button manipulation sequence 303b.

Referring to FIG. 5B, the processor 220 may generate the touch input ID information 305 of a lock object as touch input information based on a pattern PT1 that is a touch input. The processor 220 may generate, for example, the ID information of the lock object overlapping the pattern PT1 that is the touch input as the touch input ID information 305. The touch input ID information 305 may include a first initial position ID 305a and a first ID sequence 305b.

The first initial position ID 305a of the touch input ID information 305 may include ID information (e.g., ID11) of a lock object (e.g., the first lock object LO1) corresponding to an initial position at which the touch input pattern PT1 starts. Unlike illustrated, when the initial position at which the touch input for releasing the locking mode of the electronic device 201 starts is the fourth lock object LO4, the first initial position ID 305a may be stored as ID21.

The first ID sequence 305b of the touch input ID information 305 may include an ID of a lock object overlapping with the pattern PT1, which is a touch input, and order information of the overlapping lock object. Accordingly, because, after the first lock object LO1, the pattern PT1, which is a touch input, overlaps with the second lock object LO2, the third lock object LO3, the sixth lock object LO6, the ninth lock object LO9, the eighth lock object LO8 and the seventh lock object LO7 in order, the processor 220 may generate the first ID sequence 305b of 'ID12, ID13, ID23, ID33, ID32, ID31'.

In some embodiments, the processor 220 may further generate the second button manipulation information 307 corresponding to the touch input ID information 305 as the touch input information. The second button manipulation information 307 may include the first initial position ID 305a and a second button manipulation sequence 307b. The first initial position ID 305a of the second button manipulation information 307 may be the same as that of the touch input ID information 305.

The processor 220 may generate the second button manipulation sequence 307b by allowing the second button manipulation sequence 307b and the first ID sequence 305b to correspond to each other. The second button manipulation sequence 307b may indicate an operation order of the input button of the control device 402 when the control device 402 is connected to the electronic device 201. The processor 220 may determine in which order the input button of the control device 402 is operated, from the first ID sequence 305b in order to input the lock object of each ID corresponding to the first ID sequence 305b. For example, in order to input ID12 which is the next ID of the first initial position ID 305a, the processor 220 may determine that a signal indicating a 'right direction' should be received by the input button of the control device 402, and may allow the signal to be included in the second button manipulation sequence 307b. In addition, for example, in order to input ID13, which is the next ID of ID12, the processor 220 may determine that a signal indicating a 'right direction' should be received by the input button of the control device 402, and allow the signal to be included in the second button manipulation sequence 307b.

The processor 220 may store the first unlocking information including the generated touch input information in a memory (operation S11 of FIG. 3).

In the embodiment, it has been described that the first lock object area 260a includes nine lock objects, but the embodiment is not limited thereto. For example, the first lock object area 260a may include an arbitrary number of lock objects if necessary.

Referring back to FIGS. 2 and 3, in operation S13, the processor 220 may determine whether the locking mode is set in the electronic device 201.

In operation S15, when the locking mode is not set in the electronic device 201, the processor 220 may maintain the current state of the electronic device 201.

In operation S17, when the locking mode is set in the electronic device 201, the processor 220 may determine whether the control device 402 is connected to the electronic device 201.

When the control device 402 is not connected to the electronic device 201, in operation S15, the processor 220 may maintain the current state of the electronic device 201. For example, the processor 220 may display a screen informing a user that the locking mode is currently set in the electronic device 201 through the touch screen display 260 of the electronic device 201.

In operation S19, when the control device 402 is connected to the electronic device 201, the processor 220 may receive the first controller input signal from the control device. The processor 220 may compare the first controller input signal with the first unlocking information. The comparing of the first controller input signal and the first unlocking information by the processor 220 may include generating, by the processor 220, first controller input information that includes information on the initial position of the pointer based on the button activation signal and information on the movement path of the pointer, and comparing the generated first controller input information with the first unlocking information.

In operation S21, the processor 220 may determine whether the first controller input signal matches the first unlocking information.

In operation S23, when the first controller input signal matches the first unlocking information, the processor 220 may release the locking mode of the electronic device 201.

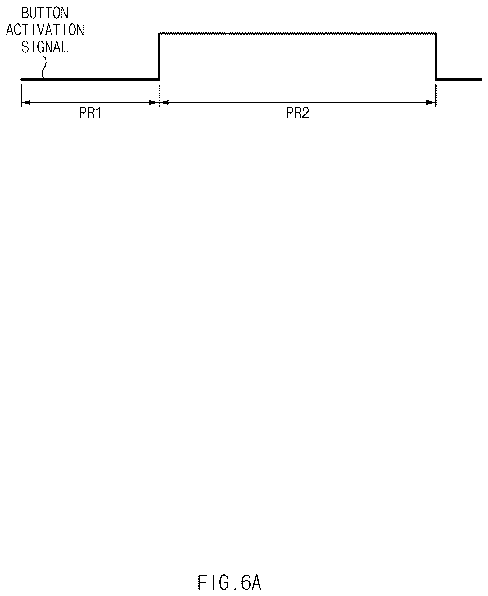

With reference to FIGS. 6A to 7D, operations S 19, S21 and S23 of FIG. 3 will be described. FIGS. 6A to 7D are diagrams illustrating the processes of comparing the first controller input signal with the first unlocking information and releasing the locking mode of the electronic device by the processor 220 according to an embodiment.

Referring to FIGS. 6A to 6D, the processor 220 may receive the first controller input signal. For example, the processor 220 may receive an initial position PI1 and a movement path PTH1 of a first pointer PP1 generated by manipulation of the control device 402.

For example, the locking mode may be set in the electronic device 201, and the electronic device 201 may be connected to the control device 402. In some embodiments, the control device 402 may be a device that includes a joystick and at least one input button. However, the technical idea of the disclosure is not limited to the above, and when the control device 402 is a device capable of transmitting a signal capable of operating the electronic device 201 by using the control device 402 by a user, the control device 402 may be a device having a shape or type different from those illustrated.

The first controller input signal may include a button activation signal (FIG. 6A). The button activation signal may indicate activation of a first input button 402a of the control device 402. The button activation signal may not be activated in a first section PR1. In the first section PR1, for example, the processor 220 does not receive an activation signal of the first input button 402a, and may receive activation signals of other input buttons of the control device 402 other than the first input button 402a. The button activation signal may be activated in a second section PR2. In the second section PR2, for example, the processor 220 may receive an activation signal of the first input button 402a. In the second section PR2, for example, activation signals of other input buttons of the control device 402 other than the first input button 402a may be received.

The processor 220 may generate the first controller input information corresponding to the first controller input signal input in the second section PR2. The processor 220 may compare the generated the first controller input information with the first unlocking information. For example, in order to release the locking mode of the electronic device 201, the user may input information capable of releasing the locking mode of the electronic device 201 into the electronic device 201 by using the control device 402. It is assumed that information capable of releasing the locking mode of the electronic device 201 is a pattern (PT1 in FIG. 4C).

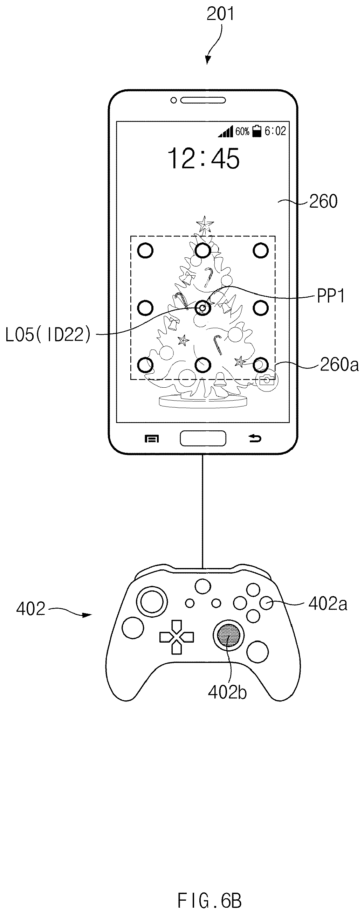

As shown in FIG. 6B, the processor 220 may transmit a first pointer display signal to the touch screen display 260. Due to the first pointer display signal, the first pointer PP1 may be displayed on the touch screen display 260. The first pointer PP1 may be located on one of the first to ninth lock objects LO1 to LO9. One of the first to ninth lock objects LO1 to LO9 may be an arbitrary lock object.

When the first pointer PP1 is moved in a state in which the first input button 402a is not activated (the first section PR1), the processor 220 may not treat the location of the first pointer PP1 and the movement path of the first pointer PP1 as the first controller input information. For example, when the first pointer PP1 is located on the fifth lock object LO5, the user who wants to release the locking mode of the electronic device 201 may use a second input button 402b to move the first pointer PP1 to the first lock object LO1 which is the starting point of the first pattern (PT1 in FIG. 4C).

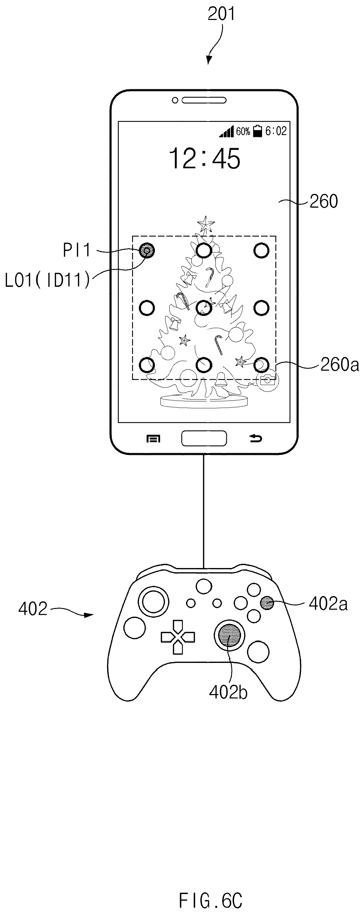

As shown in FIG. 6C, when the first input button 402a is activated and a button activation signal is input (the second section PR2), the processor 220 may determine the location of the first pointer PP1 corresponding to the button activation signal as the initial position PI1 of the first pointer PP1. For example, the user may activate the first input button 402a in a state in which the first pointer PP1 is located on the first lock object LO1 to input a pattern (PT1 in FIG. 4C) (the second section PR2).

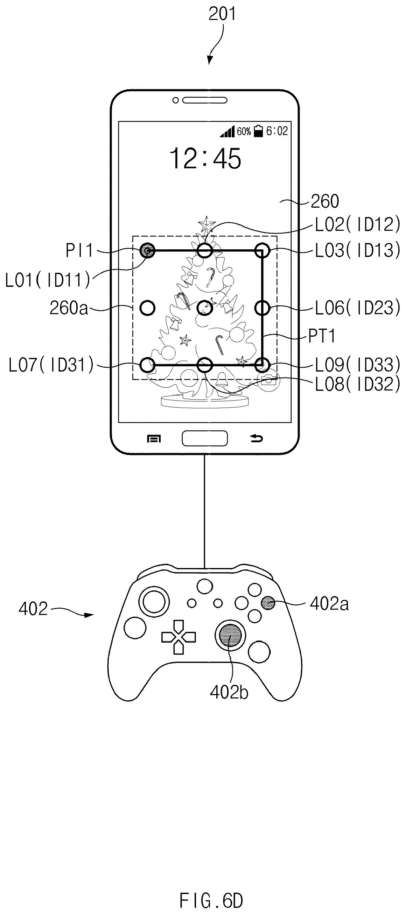

As shown in FIG. 6D, the processor 220 may transmit the first pointer movement signal to the touch screen display 260. The processor 220 may move the first pointer PP1 based on the button activation signal. In this case, the processor 220 may transmit the first pointer movement signal to display the movement path PTH1 of the first pointer PP1 on the touch screen display 260. For example, when the user manipulates the second input button 402b while activating the first input button 402a, the first pointer PP1 and the movement path PTH1 of the first pointer PP1 corresponding to the manipulation of the second input button 402b may be displayed on the touch screen display 260.

Because the first input button 402a is in an activated state (the second section PR2), the processor 220 may allow the movement path PTH1 of the first pointer PP1 based on the button activation signal to be included in the first controller input information. The movement path PTH1 along which the first pointer PP1 moves from the initial position PI1 may be a path along which is at least one of the first to ninth lock objects LO1 to LO9 moves while being overlapped with any one lock object. The processor 220 may detect the movement path PTH1 of the first pointer PP1 until activation of the first input button 402a is stopped. For example, the user may move the first pointer PP1 using the second input button 402b while activating the first input button 402a in order to input a pattern (PT1 in FIG. 4C). When the movement of the first pointer PP1 is completed, the user may stop the activation of the first input button 402a. The processor 220 may determine the path along which the first pointer PP1 has moved until the activation of the first input button 402a is stopped (that is, when the button activation signal is deactivated again) as the movement path PTH1.

The processor 220 may cause information on the initial position PI1 of the first pointer PP1 in the second section PR2 and information on the movement path PTH1 of the first pointer PP1 in the second section PR2 to be included in the first controller input information. The processor 220 may compare the first controller input information with the first unlocking information.

The processor 220 may configure the first controller input information in various forms.

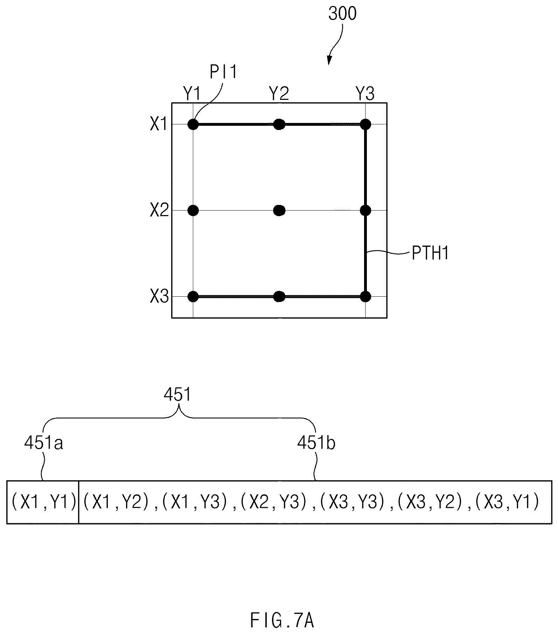

Referring to FIG. 7A, in some embodiments, the processor 220 may generate first controller input coordinates 451 by using the coordinate system 300 as first controller input information. The first controller input coordinates 451 may include a second initial position coordinates 451a and a second coordinate sequence 451b. The processor 220 may associate the initial position PI1 of the first pointer PP1 with the coordinate system 300 to set the second initial position coordinates 451a, and associate the movement path PTH1 of the first pointer PP1 with the coordinate system 300 to set the second coordinate sequence 451b. The scheme of setting the second coordinate sequence 451b may be substantially the same as that of setting the first coordinate sequence 301b described with reference to FIG. 5A.

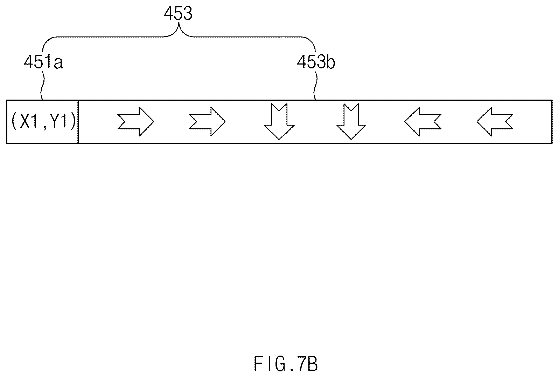

Referring to FIG. 7B, in some embodiments, the processor 220 may generate a third button manipulation information 453 corresponding to the first controller input coordinates 451 as the first controller input information. The third button manipulation information 453 may include the second initial position coordinates 451a and a third button manipulation sequence 453b. The scheme of setting the third button manipulation sequence 453b may be substantially the same as that of setting the first button manipulation sequence 303b described with reference to FIG. 5A.

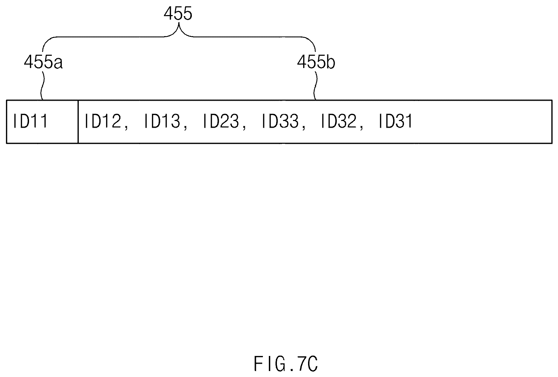

Referring to FIG. 7C, in some embodiments, the processor 220 may generate first controller input ID information 455 as the first controller input information. The first controller input ID information 455 may include a second initial position ID 455a and a second ID sequence 455b. The processor 220 may use the ID information of the lock object to set the ID 11 of the lock object corresponding to the initial position PI1 of the first pointer PP1 as the second initial position ID 455a, and may set IDs ID12, ID13, ID23, ID33, ID32 and ID31 of the lock objects corresponding to the movement path PTH1 of the first pointer PP1 as the second ID sequence 455b. The scheme of setting the second ID sequence 455b may be substantially the same as that of setting the first ID sequence 305b described with reference to FIG. 5B.

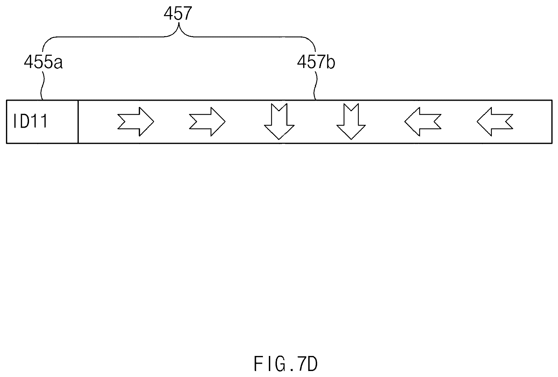

Referring to FIG. 7D, in some embodiments, the processor 220 may generate fourth button manipulation information 457 corresponding to the first controller input ID information 455 as the first controller input information. The fourth button manipulation information 457 may include the second initial position ID 455a and a fourth button manipulation sequence 457b. The scheme of setting the fourth button manipulation sequence 457b may be substantially the same as that of setting the second button manipulation sequence 307b described with reference to FIG. 5B.

In some embodiments, the processor 220 may generate at least one of the first controller input coordinates 451, the third button manipulation information 453, the first controller input ID information 455, and the fourth button manipulation information 457 as the first controller input information.

The processor 220 may compare the first controller input information with the first unlocking information. When one of the first controller input coordinates 451, the third button manipulation information 453, the first controller input ID information 455, and the fourth button manipulation information 457 is generated as the first controller input information, the processor 220 may select and compare information corresponding to the first controller input information generated among the touch input coordinates 301, the first button manipulation information 303, the touch input ID information 305, and the second button manipulation information 307.

For example, when the processor 220 generates the first controller input coordinates 451 of FIG. 7A as the first controller input information in response to the first controller input signal, the processor 220 may compare the touch input coordinates 301 of FIG. 5A with the first controller input coordinates 451 of FIG. 7A. In this example, because the touch input coordinates 301 of FIG. 5A matches the first controller input coordinates 451 of FIG. 7A, the processor 220 may release the locking mode of the electronic device 201.

For example, when the processor 220 generates the first controller input ID information 455 of FIG. 7C as the first controller input information in response to the first controller input signal, the processor 220 may compare the touch input ID information 305 of FIG. 5B with the first controller input ID information 455 of FIG. 7C. In this example, because the touch input ID information 305 of FIG. 5B matches the first controller input ID information 455 of FIG. 7C, the processor 220 may release the locking mode of the electronic device 201.

Referring back to FIGS. 2 and 3, when the first controller input signal does not match the first unlocking information, in operation S25, the processor 220 may maintain the locking mode of the electronic device 201.

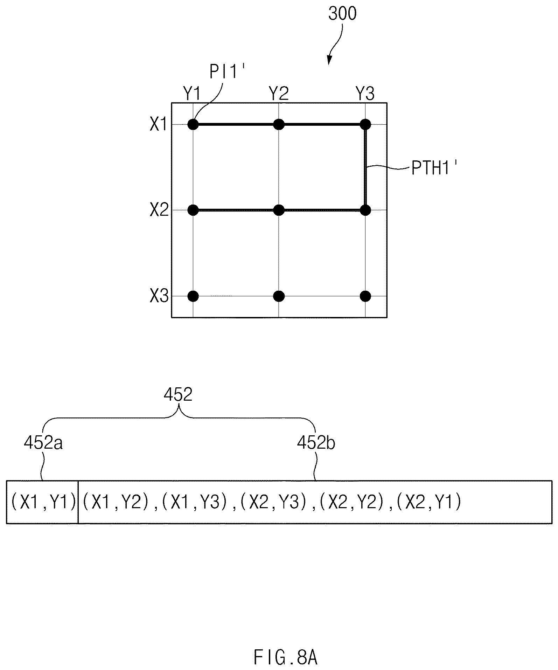

Operation S25 will be described with reference to FIGS. 8A to 8D. FIGS. 8A to 8D are diagrams illustrating a process in which the processor 220 according to an embodiment compares the first controller input signal with the first unlocking information to maintain the locking mode of the electronic device.

The processor 220 may compare first' controller input signal with the first unlocking information. The processor 220 may generate first' controller input information corresponding to the first' controller input signal.

Referring to FIG. 8A, the processor 220 may associate an initial position PI1' of a first' pointer and a movement path PTH1' of the first' pointer with the coordinate system 300 to generate first' controller input coordinates 452. For example, the processor 220 may compare the touch input coordinates 301 of FIG. 5A with the first' controller input coordinates 452. A second' initial position coordinates 452a matches the first initial position coordinates 301a of FIG. 5A, but a second' coordinate sequence 452b does not match the first coordinate sequence 301b of FIG. 5A. Accordingly, the processor 220 may maintain the locking mode of the electronic device 201.

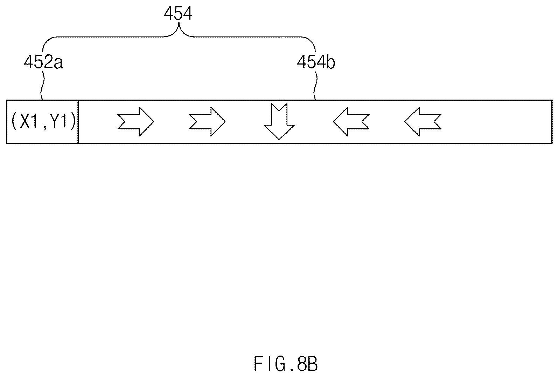

Referring to FIG. 8B, the processor 220 may generate third' button manipulation information 454 corresponding to the first' controller input coordinates 452. For example, the processor 220 may compare the first button manipulation information 303 of FIG. 5A with the third' button manipulation information 454. A second' initial position coordinate 452a matches the first initial position coordinates 301a of FIG. 5A, but a third' button manipulation sequence 454b does not match the first button manipulation sequence 303b of FIG. 5A. Accordingly, the processor 220 may maintain the locking mode of the electronic device 201.

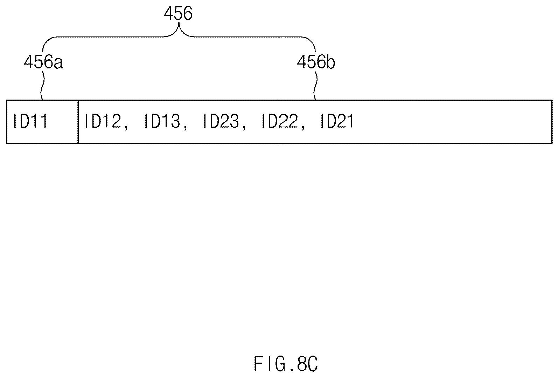

Referring to FIG. 8C, the processor 220 may generate first' controller input ID information 456 corresponding to the initial position PI1' of the first' pointer and the movement path PTH1' of the first' pointer. For example, the processor 220 may compare the touch input ID information 305 of FIG. 5B with the first' controller input ID information 456. A second' initial position ID 456a matches the first initial position ID 305a of FIG. 5B, but a second' ID sequence 456b does not match the first ID sequence 305b of FIG. 5B. Accordingly, the processor 220 may maintain the locking mode of the electronic device 201.

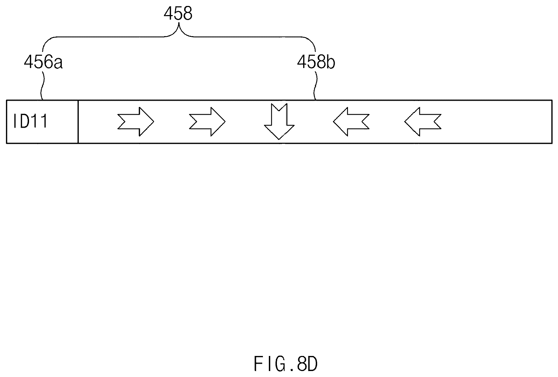

Referring to FIG. 8D, the processor 220 may generate fourth' button manipulation information 458 corresponding to the first' controller input ID information 456. For example, the processor 220 may compare the second button manipulation information 307 of FIG. 5B with the fourth' button manipulation information 458. A second' initial position ID 456a matches the first initial position ID 305a of FIG. 5B, but a fourth' button manipulation sequence 458b does not match. Accordingly, the processor 220 may maintain the locking mode of the electronic device 201.

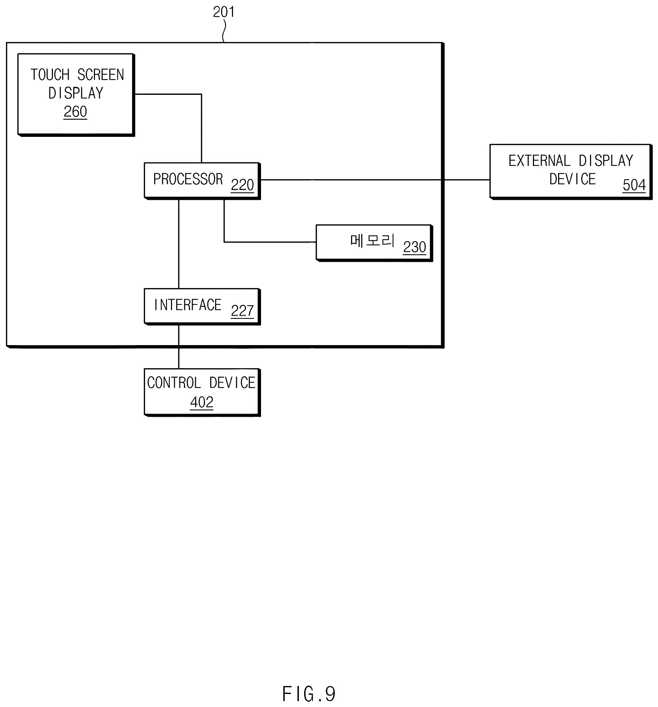

Hereinafter, a method of releasing the locking mode of the electronic device 201 using the control device 402 by the processor 220 according to an embodiment will be described with reference to FIGS. 9 to 14C. For clarity of explanation, overlapping ones with those described above will be simplified or omitted.

FIG. 9 is a block diagram of the electronic device 201 according to an embodiment.

Referring to FIG. 9, the electronic device 201 may be connected to an external display device 504. In some embodiments, the external display device 504 may be a monitor or a television. However, the technical idea of the disclosure is not limited to the above, and when the external display device 504 is a device capable of displaying a screen displayed on the touch screen display 260 of the electronic device 201, the external display device may be a device having a form or type different from that illustrated.

The processor 220 may generate a first background screen display signal and transmit the first background screen display signal to the external display device 504. The processor 220 may receive a first controller input from the control device 402. When a button activation signal included in the first controller input signal is input, the processor 220 may generate a second pointer display signal and a second pointer movement signal and transmit the generated second pointer display signal and second pointer movement signal to the external display device 504.

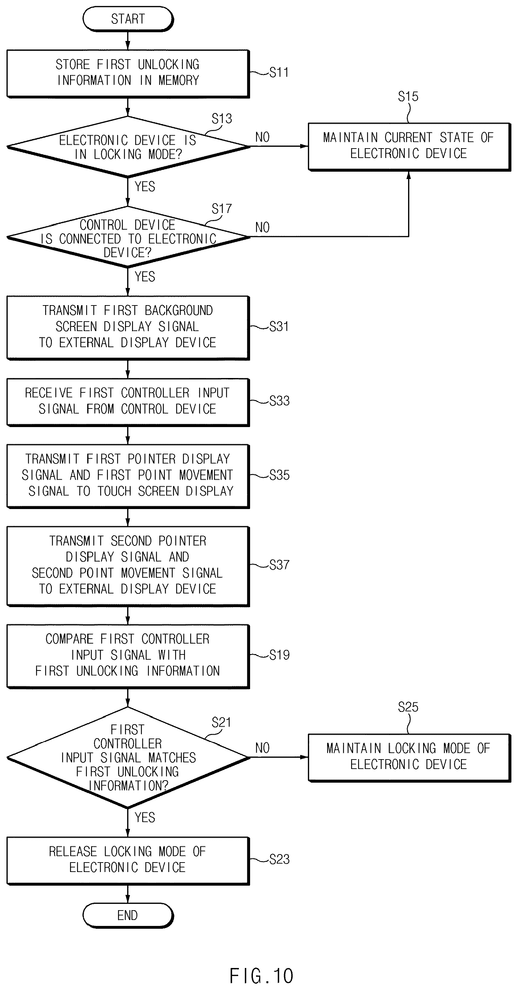

FIG. 10 is a flowchart illustrating a method of releasing a locking mode of the electronic device 201 using the control device 402 by the processor 220 according to an embodiment. It is assumed that the operations of FIG. 10 are performed by the electronic device 201 of FIG. 9. The operations of FIG. 10 described as being performed by the electronic device 201 may be implemented with instructions that may be performed (or executed) by the processor 220 of the electronic device 201. For example, the instructions may be stored in a computer recording medium or the memory 230 of the electronic device 201 shown in FIG. 9.

Operations S11, S13, S15 and S17 of FIG. 10 may correspond to the operations S11, S13, S15 and S17 of FIG. 3.

Referring to FIGS. 9 and 10, in operation S31, the processor 220 may transmit a first background screen display signal to the external display device 504.

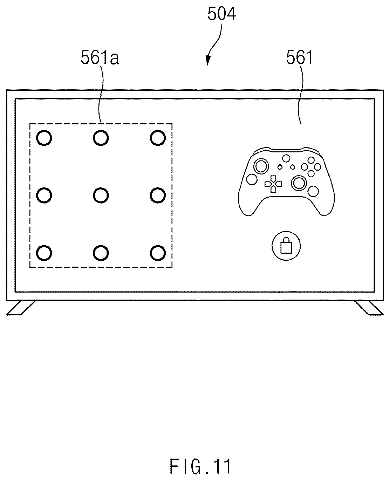

Operation S31 of FIG. 10 will be described with reference to FIG. 11. FIG 11 is a diagram illustrating the first background screen display signal according to an embodiment.

Referring to FIG. 11, the electronic device 201 may be connected to the control device 402 and the external display device 504. When the locking mode is set in the electronic device 201, the processor 220 may transmit the first background screen display signal to the external display device 504. The external display device 504 may display a specific screen in response to a signal received from the processor 220. For example, the external display device 504 may display a first screen 561 in response to the first background screen display signal. For example, the first screen 561 may include a second lock object area 561a. Each lock object included in the second lock object area 561a may correspond to each lock object included in the first lock object area 260a described with reference to FIG. 4B.

Referring back to FIGS. 9 and 10, in operation S33, the processor 220 may receive the first controller input signal from the control device 402.

When the processor 220 receives the first controller input signal, in operation S35, the processor 220 may transmit the first pointer display signal and the first pointer movement signal to the touch screen display 260.

When the processor 220 receives the first controller input signal, in operation S37, the processor 220 may transmit the second pointer display signal and the second pointer movement signal to the touch screen display 260.

In operation S19, the processor 220 may compare the first controller input signal with the first unlocking information. The operation S19 may correspond to the operation S19 of FIG. 3.

In some embodiments, operations S35 and S37 may be sequentially performed (or executed). In some embodiments, operations S35 and S37 may be performed (or executed) simultaneously. In some embodiments, operation S37 may be omitted.

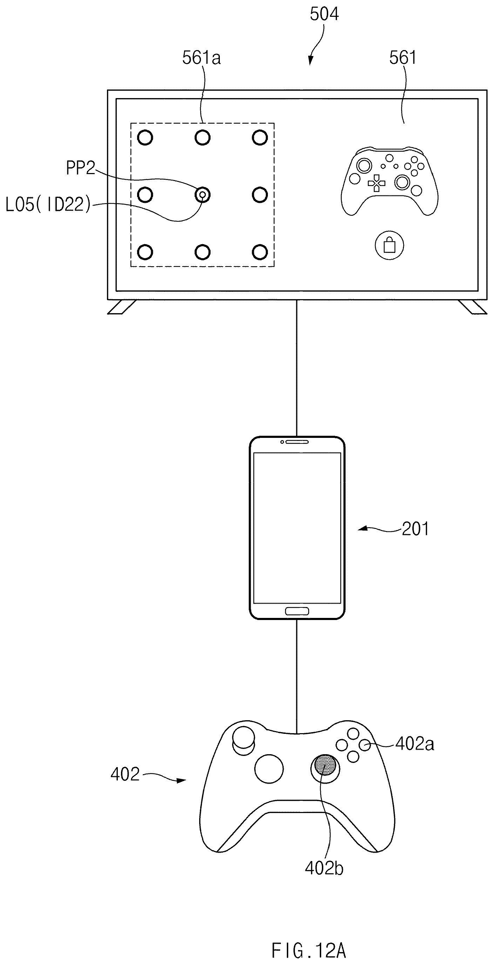

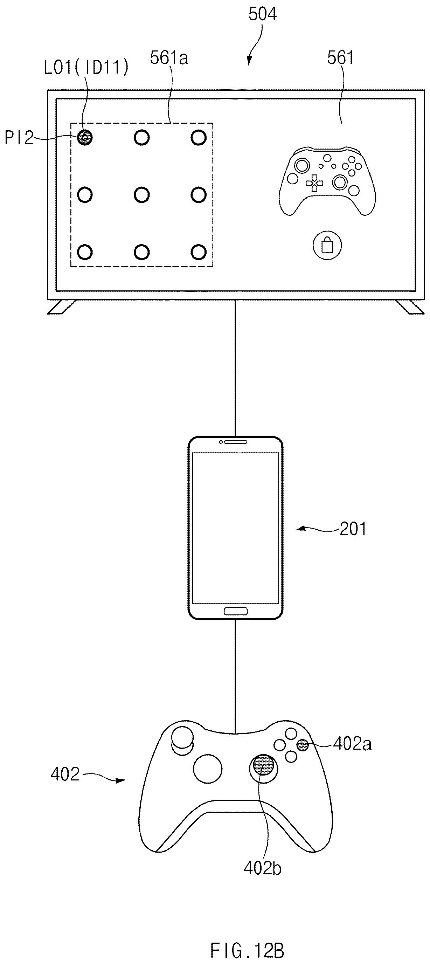

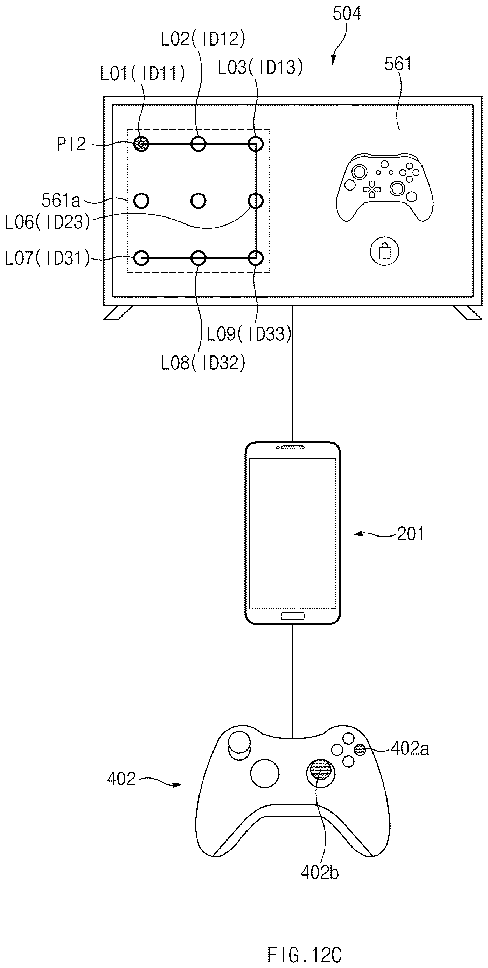

Operations S33, S35 and S37 of FIG. 10 will be described with reference to FIGS. 6A, 12A, 12B and 12C. FIGS. 12A, 12B and 12C are diagrams each illustrating the second pointer display signal and the second pointer movement signal according to an embodiment.

Referring to FIGS. 6A and 12A, the processor 220 may transmit the second pointer display signal to the external display device 504. Due to the second pointer display signal, a second pointer PP2 may be displayed on the external display device 504. The second pointer PP2 may be positioned on any one lock object (e.g., the fifth lock object LO5) among lock objects in the second lock object area 561a. As described with reference to FIG. 6B, when the second pointer PP2 is moved in the first section PR1, the processor 220 may not treat the location and movement path of the second pointer PP2 as the first controller input information.

Referring to FIGS. 6A and 12B, as described with reference to FIG. 6C, the processor 220 may determine the location of the second pointer PP2 corresponding to the button activation signal as an initial position PI2 of the second pointer PP2. The processor 220 may transmit the second pointer display signal to the external display device 504 to display the second pointer PP2 at the initial position PI2 of the second pointer PP2.

Referring to FIGS. 6A and 12C, the processor 220 may transmit the second pointer movement signal to the external display device 504. As described with reference to FIG. 6D, the processor 220 may move the second pointer PP2 based on the button activation signal. A movement path PTH2 along which the second pointer PP2 moves from the initial position PI2 may correspond to the movement path PTH1 of the first pointer PP1 described with reference to FIG. 6D. The processor 220 may transmit the second pointer display signal and the second pointer movement signal to the external display device 504 such that the second pointer PP2 is displayed at the initial position PI2 of the second pointer PP2, but the movement path PTH2 of the second pointer PP2 may not be displayed. For example, the user may see the initial position PI2 of the second pointer PP2 through the external display device 504, but may not see the movement path PTH2 of the second pointer PP2.

The processor 220 may allow information on the initial position PI2 of the second pointer PP2 in the second section PR2 and information on the movement path PTH2 of the second pointer PP2 to be included in the first controller input information. The processor 220 may compare the first controller input information with the first unlocking information. As described with reference to FIGS. 7A to 7D, the processor 220 may configure the first controller input information in various forms.

In some embodiments, the processor 220 may not transmit the first pointer display signal to the electronic device 201. In this case, the first lock object area (260a in FIG. 6B) may not be displayed on the electronic device 201.

In some embodiments, the processor 220 may transmit the first pointer display signal to the electronic device 201. In this case, as shown in FIGS. 6B, 6C and 6D, the first lock object area 260a, the first pointer PP1, the initial position PI1 of the first pointer PP1, and the movement path PTH1 of the first pointer PP1 may be displayed on the electronic device 201. When a user manipulates a control device, the first pointer PP1 and the second pointer PP2 may move substantially simultaneously while being associated.

Operations S21, S23 and S25 may correspond to the operations S21, S23 and S25 of FIG. 3.

Hereinafter, a method of releasing a locking mode of the electronic device 201 by using the control device 402 by the processor 220 according to an embodiment will be described with reference to FIGS. 9 and 13 to 16C. For clarity of explanation, overlapping ones with those described above will be simplified or omitted.

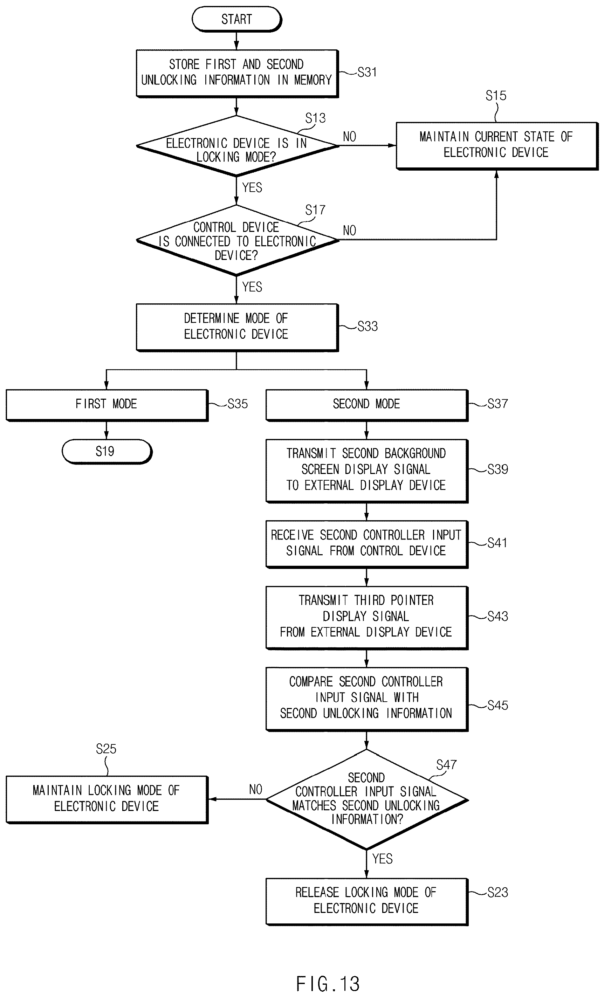

FIG. 13 is a flowchart illustrating a method of releasing a locking mode of the electronic device 201 by using the control device 402 by the processor 220 according to an embodiment. It is assumed that the operations of FIG. 13 are performed by the electronic device 201 of FIG. 9. The operations of FIG. 13 described as being performed by the electronic device 201 may be implemented with instructions that may be performed (or executed) by the processor 220 of the electronic device 201. For example, the instructions may be stored in a computer recording medium or the memory 230 of the electronic device 201 shown in FIG. 9.

Referring to FIGS. 9 and 13, in operation S31, the processor 220 may store first unlocking information and second unlocking information in a memory. The storing of the first unlocking information in the memory by the processor 220 may correspond to the operation S11 of FIG. 3. The second unlocking information may be information for releasing the locking mode of the electronic device 201 based on an order in which the input buttons of the control device 402 are activated.

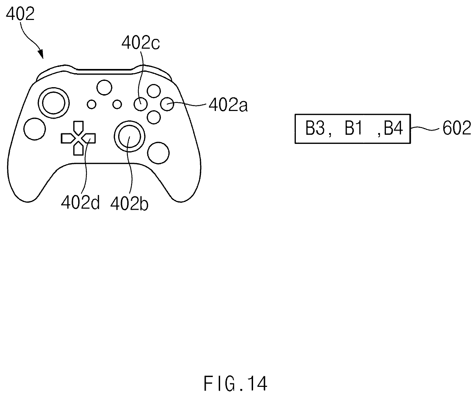

With reference to FIG. 14, operation S31 of FIG. 13 will be described. FIG. 14 is a diagram illustrating a method of generating the second unlocking information and storing the second unlocking information in the memory 230 by the processor 220 according to an embodiment.

Referring to FIG. 14, the processor 220 may generate second unlocking information 602 which is information on an order in which the input buttons of the control device are activated.

The processor 220 may allow information on an activated input button among input buttons of the control device 402 and an activation order to be included in the second unlocking information. For example, it is assumed that, as information for releasing the locking mode of the electronic device 201, the user sequentially inputs a third input button 402c, the first input button 402a, and a fourth input button 402d of the control device 402. In this case, the processor 220 may sequentially store information B3 corresponding to the third input button 402c, information B1 corresponding to the first input button 402a, and information corresponding to the fourth input button 402d to generate the second unlocking information 602.

For example, when a corresponding button among the input buttons of the control device 402 is activated, the information B3 corresponding to the third input button 402c, the information B1 corresponding to the first input button 402a, and the information B4 corresponding to the fourth input button 402d may be unique information input to the processor 220.

The operations S13, S15 and S17 of FIG. 13 may correspond to the operations S13, S15, and S17 of FIG. 3.

Referring back to FIGS. 9 and 13, in operation S33, the processor 220 may determine a mode of the electronic device 201.

In operation S35, the processor 220 may perform operation S19 of FIG. 3 when the electronic device 201 is in a first mode.

In operation S37, the processor 220 may perform operation S39 of FIG. 10 when the electronic device 201 is in a second mode. In operation S39, the processor 220 may transmit a second background screen display signal to the external display device 504.

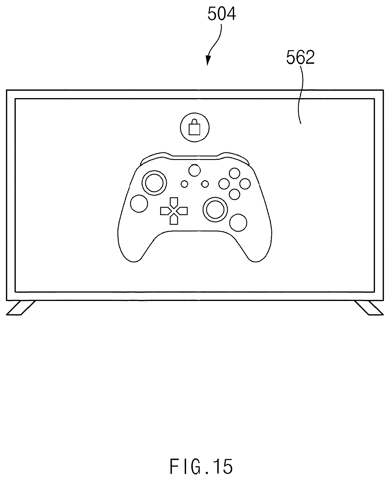

With reference to FIG. 15, operation S39 of FIG. 13 will be described. FIG. 15 is a diagram illustrating the second background screen display signal according to an embodiment.

Referring to FIG. 15, the processor 220 may transmit the second background screen display signal to the external display device 504. The external display device 504 may display a second screen 562 in response to the second background screen display signal. For example, the second screen 562 may be a screen representing each input button of the control device 402.

Referring back to FIGS. 9 and 13, in operation S41, the processor 220 may receive a second controller input signal from the control device 402.

When the processor 220 receives the second controller input signal, in operation S43, the processor 220 may transmit a third pointer display signal to the external display device. When at least one of the input buttons of the control device 402 is activated, the processor 220 may generate the third pointer display signal to allow a third pointer corresponding to a signal input by the activated input button to be displayed on the external display device 504.

In operation S45, the processor 220 may compare the second controller input signal with the second unlocking information. The comparing of the second controller input signal and the second unlocking information by the processor 220 may include generating, by the processor 220, second controller input information including information on an order in which the input buttons of the control device 402 are activated, and comparing the generated second controller input information with the second unlocking information.

In operation S47, the processor 220 may determine whether the second controller input signal matches the second unlocking information. When matched, in operation S23, the processor 220 may release the locking mode of the electronic device. When not matched, in operation S25, the processor 220 may maintain the locking mode of the electronic device.

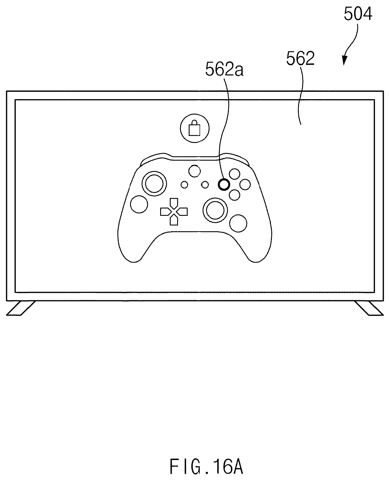

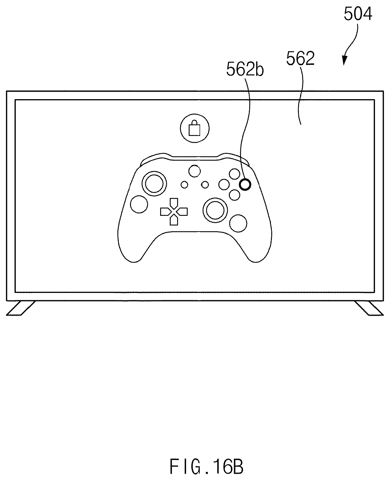

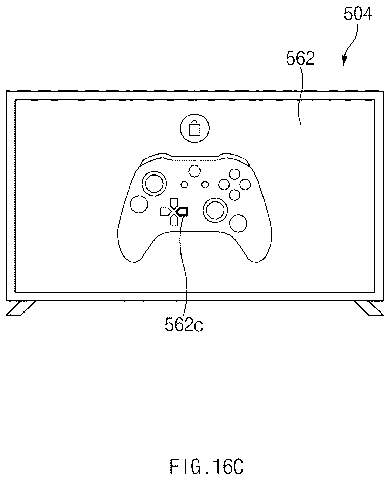

Operations S43, S45 and S47 of FIG. 13 will be described with reference to FIGS. 16A, 16B and 16C. FIGS. 16A, 16B and 16C are diagrams illustrating that the processor 220 compares the second controller input signal with the second unlocking information according to an embodiment.

Referring to FIGS. 16A, 16B and 16C, the processor 220 may receive the second controller input signal. For example, the processor 220 may display a third pointer corresponding to the activation of the input button of the control device 402 on a specific area of the second screen 562. In other words, when the user manipulates the control device 402 to activate the input button, the processor 220 may display the third pointer on a specific area of the second screen 562 based on the information on the activated input button.

In some embodiments, the second controller input signal may include information on an order in which the input buttons of the control device 402 are activated. For example, in FIG. 16A, when receiving the activation signal of the third input button 402c as the second controller input signal, the processor 220 may display the third pointer on a first area 562a of the second screen 562 in response to the activation signal of the third input button 402c.

Referring to FIG. 16B, when receiving the activation signal of the first input button 402a as the second controller input signal, the processor 220 may display the third pointer on a second area 562b of the second screen 562 in response to the activation signal of the first input button 402a.

Referring to FIG. 16C, when receiving the activation signal of the fourth input button 402d as the second controller input signal, the processor 220 may display the third pointer on a third area 562c of the second screen 562 in response to the activation signal of the fourth input button 402d.

In some embodiments, the processor 220 may allow the order in which the third input button 402c, the first input button 402a, and the fourth input button 402d are activated to be included in the second controller input information. The processor 220 may compare the second controller input information corresponding to the second controller input signal with the second unlocking information.

Operations S23 and S25 of FIG. 13 may correspond to the operations S23 and S25 of FIG. 3.

Hereinafter, with reference to FIGS. 9, 13, 17 and 18, a method of releasing a locking mode of the electronic device 201 using the control device 402 by the processor 220 according to an embodiment will be described. For clarity of explanation, overlapping ones with those described above will be simplified or omitted.

Referring to FIGS. 9 and 13, in operation S31, the processor 220 may store the first unlocking information and the second unlocking information in a memory.

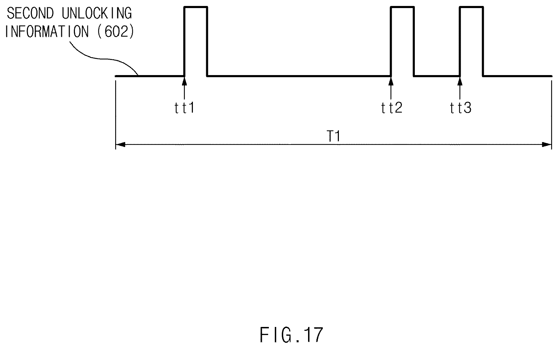

With reference to FIG. 17, operation S31 of FIG. 13 will be described. FIG. 17 is a diagram illustrating a method of generating the second unlocking information and storing the second unlocking information in the memory 230 by the processor 220 according to an embodiment.

Referring to FIG. 17, unlike the description of FIG. 14, the second unlocking information 602 may include information on a time when the input button of the control device 402 is activated in a specific section T1 set by the user. For example, the specific section T1 may correspond to a specific section of specific music. In this case, when the electronic device 201 is in the locking mode, the processor 220 may generate a signal for the user to reproduce the specific section T1 of specific music.

In the specific section T1, the processor 220 may allow information that at least one of the input buttons of the controller device 402 is activated at a first time tt1, a second time tt2, and a third time tt3 to be included in the second unlocking information 602. For example, when the first input button 402a is activated at the first time tt1, the second time tt2, and the third time tt3 in the specific section T1 set by the user, the processor 220 may allow the locking mode of the electronic device 201 to be released.

Referring back to FIGS. 9 and 13, in operation S39, the processor 220 may transmit the second background screen display signal to the external display device 504.

In operation S41, the processor 220 may receive the second controller input signal from the control device 402.

In operation S45, the processor 220 may compare the second controller input signal with the second unlocking information.

In operation S47, the processor 220 may determine whether the second controller input signal matches the second unlocking information. When matched, in operation S23, the processor 220 may release the locking mode of the electronic device. When not matched, in operation S25, the processor 220 may maintain the locking mode of the electronic device.

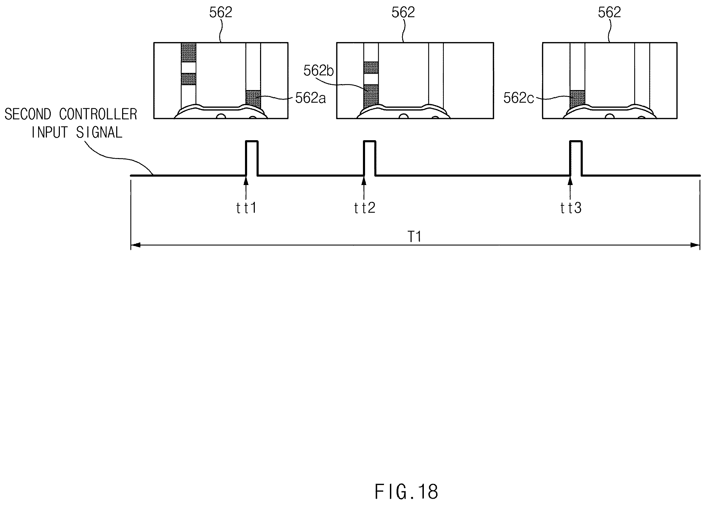

With reference to FIG. 18, operations S43, S45 and S47 of FIG. 13 will be described. FIG. 18 is a diagram illustrating that the processor 220 compares the second controller input signal with the second unlocking information according to an embodiment.

Referring to FIG. 18, in some embodiments, the second controller input signal may include a signal for activating an input button of the control device 402 at the first time tt1, the second time tt2, and the third time tt3 during the specific section T1.

The processor 220 may display the third pointer on the first area 562a of the second screen 562 at the first time tt1. The processor 220 may display the third pointer on the second area 562b of the second screen 562 at the second time tt2. The processor 220 may display the third pointer on the third area 562c of the second screen 562 at the third time tt3. For example, when the first area 562a is activated at the first time tt1 during the first section T1, the user may activate one of the input buttons of the control device 402. When the second area 562b is activated at the second time tt2, the user may activate one of the input buttons of the control device 402. When the third area 562c is activated at the third time tt3, the user may activate one of the input buttons of the control device 402.

The processor 220 may allow the order in which the input buttons of the control device 402 are activated at the first time tt1, the second time tt2, and the third time tt3 to be included in the second controller input information. The processor 220 may compare the second controller input information corresponding to the second controller input signal with the second unlocking information.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100, 201) comprising:
a processor (120, 220);
a touch screen display (160, 260) electrically connected to the processor (120, 220);
an interface (227) which is connected to a control device (402), and which transmits a controller input signal including information associated with an operation of a first input button (402a) provided in the control device (402) received from the control device to the processor;
a memory (230) configured to store first unlocking information to release a locking mode of the electronic device based on a touch input that is input through the touch screen display,
wherein the memory (230) stores instructions that, when executed, cause the processor (120, 220) to:
when the locking mode is set to the electronic device (100, 201) and the control device (402) is connected to the electronic device, display a first lock screen including a plurality of objects (L01-L09),
determine a pattern input for the plurality of objects, corresponding to an operation of a second input button (402b) provided in the control device (402) while the controller input signal is received from the control device (402), and
release the locking mode of the electronic device when the pattern input matches the first unlocking information,
wherein the controller input signal includes a button activation signal indicating activation of the first input button (402a) provided in the control device (402),
wherein the instructions, when executed, cause the processor (120, 220) to:
determine the pattern input based on the operation of the second input button (402b) being received while the first input button (402a) is activated,
determine a first object on which the pattern input is started, from among the plurality of objects, based on the pattern input determined while operating the second input button (402b), display, through the first lock screen, a pointer based on the first object, and
sequentially display, through the first lock screen, a movement path of the pointer based on the pattern input determined while operating the second input button (402b).

2. The electronic device (100, 201) of claim 1, wherein the instructions, when executed, cause the processor (120, 220) to:
when the electronic device (100, 201) is connected with an external display device (504), display a second lock screen including a plurality of objects through the external display device (504), and
display the pointer through the second lock screen.

3. The electronic device (100, 201) of claim 2, wherein the instructions, when executed, cause the processor (120, 220) to:
sequentially display the movement path of the pointer through the second lock screen after displaying the pointer.

4. A method of unlocking an electronic device (100, 201) by using a control device (402), the method comprising:
when the electronic device (100, 201) is in a locking mode and the control device (402) is connected to the electronic device (100, 201), displaying a first lock screen including a plurality of objects;
receiving a controller input signal including information associated with an operation of a first input button (402a) provided in the control device (402) from the control device (402);
determine a pattern input for the plurality of objects, corresponding to an operation of a second input button (402b) provided in the control device (402) while the controller input signal is received from the control device (402); and
releasing the locking mode of the electronic device (100, 201) when the pattern input matches the first unlocking information,
wherein the controller input signal includes a button activation signal indicating activation of the first input button (402a) provided in the control device (402),
further comprising:
determining the pattern input based on the operation of the second input button (402b) being received while the first input button (402a) is activated,
determining a first object on which the pattern input is started, from among the plurality of objects, based on the pattern input determined while operating the second input button (402b),
displaying, through the first lock screen, a pointer based on the first object, and
sequentially displaying, through the first lock screen, a movement path of the pointer based on the pattern input determined while operating the second input button (402b).

5. The method of claim 4, further comprising:
when the electronic device (100, 201) is connected with an external display device (504), displaying a second lock screen including a plurality of objects through the external display device (504), and
displaying the pointer through the second lock screen.

6. The method of claim5, further comprising:
sequentially displaying the movement path of the pointer through the second lock screen after displaying the pointer.

## Patentansprüche

1. Elektronische Vorrichtung (100, 201), umfassend:
einen Prozessor (120, 220);
eine Berührungsbildschirmanzeige (160, 260), die elektrisch mit dem Prozessor (120, 220) verbunden ist;
eine Schnittstelle (227), die mit einer Steuervorrichtung (402) verbunden ist und die ein Steuergeräteeingangssignal, das Informationen beinhaltet, die einer Betätigung einer in der Steuervorrichtung (402) bereitgestellten ersten Eingabetaste (402a) zugeordnet sind, das von der Steuervorrichtung empfangen wird, an den Prozessor überträgt;
einen Speicher (230), der dazu konfiguriert ist, erste Entsperrinformationen zu speichern, um einen Sperrmodus der elektronischen Vorrichtung basierend auf einer Berührungseingabe, die durch die Berührungsbildschirmanzeige eingegeben wird, freizugeben,
wobei der Speicher (230) Anweisungen speichert, die, wenn sie ausgeführt werden, den Prozessor (120, 220) zu Folgendem veranlassen:
wenn der Sperrmodus auf die elektronische Vorrichtung (100, 201) eingestellt ist und die Steuervorrichtung (402) mit der elektronischen Vorrichtung verbunden ist, Anzeigen eines ersten Sperrbildschirms, der eine Vielzahl von Objekten (L01-L09) beinhaltet,
Bestimmen einer Mustereingabe für die Vielzahl von Objekten, die einer Betätigung:
einer in der Steuervorrichtung (402) bereitgestellten zweiten Eingabetaste (402b) entsprechen, während das Steuergeräteeingangssignal von der Steuervorrichtung (402) empfangen wird, und Freigeben des Sperrmodus der elektronischen Vorrichtung, wenn die Mustereingabe mit den ersten Entsperrinformationen übereinstimmt,
wobei das Steuergeräteeingangssignal ein Tastenaktivierungssignal beinhaltet, das eine Aktivierung der in der Steuervorrichtung (402) bereitgestellten ersten Eingabetaste (402a) angibt,
wobei die Anweisungen, wenn sie ausgeführt werden, den Prozessor (120, 220) zu Folgendem veranlassen:
Bestimmen der Mustereingabe basierend auf der Betätigung der zweiten Eingabetaste (402b), die empfangen wird, während die erste Eingabetaste (402a) aktiviert wird, Bestimmen eines ersten Objekts, bei dem die Mustereingabe gestartet wird, aus der Vielzahl von Objekten basierend auf der Mustereingabe, die während der Betätigung der zweiten Eingabetaste (402b) bestimmt wird, Anzeigen, durch den ersten Sperrbildschirm, eines Zeigers basierend auf dem ersten Objekt, und
sequentielles Anzeigen, durch den ersten Sperrbildschirm, eine Bewegungsbahn des Zeigers basierend auf der Mustereingabe, die bestimmt wird, während die zweite Eingabetaste (402b) betätigt wird.

2. Elektronische Vorrichtung (100, 201) nach Anspruch 1, wobei die Anweisungen wenn sie ausgeführt werden, den Prozessor (120, 220) zu Folgendem veranlassen:
wenn die elektronische Vorrichtung (100, 201) mit einer externen Anzeigevorrichtung (504) verbunden ist, Anzeigen eines zweiten Sperrbildschirms, der eine Vielzahl von Objekten beinhaltet, durch die externe Anzeigevorrichtung (504), und
Anzeigen des Zeigers durch den zweiten Sperrbildschirm.

3. Elektronische Vorrichtung (100, 201) nach Anspruch 2, wobei die Anweisungen wenn sie ausgeführt werden, den Prozessor (120, 220) zu Folgendem veranlassen:
sequentielles Anzeigen der Bewegungsbahn des Zeigers durch den zweiten Sperrbildschirm, nachdem der Zeiger angezeigt wurde.

4. Verfahren zum Entsperren einer elektronischen Vorrichtung (100, 201), indem eine Steuervorrichtung (402) verwendet wird, wobei das Verfahren Folgendes umfasst:
wenn sich die elektronische Vorrichtung (100, 201) in einem Sperrmodus befindet und die Steuervorrichtung (402) mit der elektronischen Vorrichtung (100, 201) verbunden ist, Anzeigen eines ersten Sperrbildschirms, der eine Vielzahl von Objekten beinhaltet;
Empfangen eines Steuergeräteeingangssignals, das Informationen beinhaltet, die einer Betätigung einer in der Steuervorrichtung (402) bereitgestellten ersten Eingabetaste (402a) zugeordnet sind, von der Steuervorrichtung (402);
Bestimmen einer Mustereingabe für die Vielzahl von Objekten, die einer Betätigung einer in der Steuervorrichtung (402) bereitgestellten zweiten der Eingabetaste (402b) entspricht, während das Steuergeräteeingangssignal von der Steuervorrichtung (402) empfangen wird; und
Freigeben des Sperrmodus der elektronischen Vorrichtung (100, 201), wenn die Mustereingabe mit den ersten Entsperrinformationen übereinstimmt, wobei das Steuergeräteeingangssignal ein Tastenaktivierungssignal beinhaltet, das eine Aktivierung der in der Steuervorrichtung (402) bereitgestellten ersten Eingabetaste (402a) angibt, ferner umfassend:
Bestimmen der Mustereingabe basierend auf der Betätigung der zweiten Eingabetaste (402b), die empfangen wird, während die erste Eingabetaste (402a) aktiviert wird, Bestimmen eines ersten Objekts, bei dem die Mustereingabe gestartet wird, aus der Vielzahl von Objekten basierend auf der Mustereingabe, die während der Betätigung der zweiten Eingabetaste (402b) bestimmt wird, Anzeigen, durch den ersten Sperrbildschirm, eines Zeigers basierend auf dem ersten Objekt, und sequentielles Anzeigen, durch den ersten Sperrbildschirm, eine Bewegungsbahn des Zeigers basierend auf der Mustereingabe, die bestimmt wird, während die zweite Eingabetaste (402b) betätigt wird.

5. Verfahren nach Anspruch 4, ferner umfassend:
wenn die elektronische Vorrichtung (100, 201) mit einer externen Anzeigevorrichtung (504) verbunden ist, Anzeigen eines zweiten Sperrbildschirms, der eine Vielzahl von Objekten beinhaltet, durch die externe Anzeigevorrichtung (504), und
Anzeigen des Zeigers durch den zweiten Sperrbildschirm.

6. Verfahren nach Anspruch 5, ferner umfassend:
sequentielles Anzeigen der Bewegungsbahn des Zeigers durch den zweiten Sperrbildschirm, nachdem der Zeiger angezeigt wurde.

## Revendications

1. Dispositif électronique (100, 201) comprenant :
un processeur (120, 220) ;
un affichage à écran tactile (160, 260) connecté électriquement au processeur (120, 220) ;
une interface (227) qui est connectée à un dispositif de commande (402), et qui transmet un signal d'entrée de dispositif de commande, comprenant des informations associées à un actionnement d'un premier bouton d'entrée (402a) prévu dans le dispositif de commande (402), reçu en provenance du dispositif de commande vers le processeur ;
une mémoire (230) configurée pour stocker des premières informations de déverrouillage pour libérer un mode de verrouillage du dispositif électronique sur la base d'une entrée tactile qui est entrée par l'intermédiaire de l'affichage à écran tactile,
dans lequel la mémoire (230) stocke des instructions qui, lorsqu'elles sont exécutées, amènent le processeur (120, 220) à :
lorsque le mode de verrouillage est défini sur le dispositif électronique (100, 201) et que le dispositif de commande (402) est connecté au dispositif électronique, afficher un premier écran de verrouillage comprenant une pluralité d'objets (L01-L09),
déterminer une entrée de motif pour la pluralité d'objets, correspondant à un actionnement d'un second bouton d'entrée (402b) prévu dans le dispositif de commande (402) pendant que le signal d'entrée de dispositif de commande est reçu en provenance du dispositif de commande (402), et
libérer le mode de verrouillage du dispositif électronique lorsque l'entrée de motif correspond aux premières informations de déverrouillage,
dans lequel le signal d'entrée du dispositif de commande comprend un signal d'activation de bouton indiquant l'activation du premier bouton d'entrée (402a) prévu dans le dispositif de commande (402),
dans lequel les instructions, lorsqu'elle sont exécutées, amènent le processeur (120, 220) à :
déterminer l'entrée de motif sur la base du fait que l'actionnement du second bouton d'entrée (402b) est reçu pendant que le premier bouton d'entrée (402a) est activé,
déterminer un premier objet sur lequel l'entrée de motif est démarrée, parmi la pluralité d'objets, sur la base de l'entrée de motif déterminée lors de l'actionnement du second bouton d'entrée (402b),
afficher, par l'intermédiaire du premier écran de verrouillage, un pointeur sur la base du premier objet, et
afficher séquentiellement, par l'intermédiaire du premier écran de verrouillage, une trajectoire de mouvement du pointeur sur la base de l'entrée de motif déterminée lors de l'actionnement du second bouton d'entrée (402b).

2. Dispositif électronique (100, 201) de la revendication 1, dans lequel les instructions, lorsqu'elles sont exécutées, amènent le processeur (120, 220) à :
lorsque le dispositif électronique (100, 201) est connecté à un dispositif d'affichage externe (504), afficher un second écran de verrouillage comprenant une pluralité d'objets par l'intermédiaire du dispositif d'affichage externe (504), et
afficher le pointeur par l'intermédiaire du second écran de verrouillage.

3. Dispositif électronique (100, 201) de la revendication 2, dans lequel les instructions, lorsqu'elles sont exécutées, amènent le processeur (120, 220) à :
afficher séquentiellement la trajectoire de mouvement du pointeur par l'intermédiaire du second écran de verrouillage après l'affichage du pointeur.

4. Procédé de déverrouillage d'un dispositif électronique (100, 201) au moyen d'un dispositif de commande (402), le procédé comprenant :
lorsque le dispositif électronique (100, 201) est dans un mode de verrouillage et que le dispositif de commande (402) est connecté au dispositif électronique (100, 201), l'affichage d'un premier écran de verrouillage comprenant une pluralité d'objets ;
la réception d'un signal d'entrée de dispositif de commande comprenant des informations associées à un actionnement d'un premier bouton d'entrée (402a) prévu dans le dispositif de commande (402) en provenance du dispositif de commande (402) ;
la détermination d'une entrée de motif pour la pluralité d'objets, correspondant à un actionnement d'un second bouton d'entrée (402b) prévu dans le dispositif de commande (402) pendant que le signal d'entrée de dispositif de commande est reçu en provenance du dispositif de commande (402) ; et
la libération du mode de verrouillage du dispositif électronique (100, 201) lorsque l'entrée de motif correspond aux premières informations de déverrouillage,
dans lequel le signal d'entrée du dispositif de commande comprend un signal d'activation de bouton indiquant l'activation du premier bouton d'entrée (402a) prévu dans le dispositif de commande (402),
comprenant en outre :
la détermination de l'entrée de motif sur la base du fait que l'actionnement du second bouton d'entrée (402b) est reçu pendant que le premier bouton d'entrée (402a) est activé,
la détermination d'un premier objet sur lequel l'entrée de motif est démarrée, parmi la pluralité d'objets, sur la base de l'entrée de motif déterminée lors de l'actionnement du second bouton d'entrée (402b),
l'affichage, par l'intermédiaire du premier écran de verrouillage, d'un pointeur sur la base du premier objet, et
l'affichage séquentiel, par l'intermédiaire du premier écran de verrouillage, d'une trajectoire de mouvement du pointeur sur la base de l'entrée de motif déterminée lors de l'actionnement du second bouton d'entrée (402b).

5. Procédé de la revendication 4, comprenant en outre :
lorsque le dispositif électronique (100, 201) est connecté à un dispositif d'affichage externe (504), l'affichage d'un second écran de verrouillage comprenant une pluralité d'objets par l'intermédiaire du dispositif d'affichage externe (504), et
l'affichage du pointeur par l'intermédiaire du second écran de verrouillage.

6. Procédé de la revendication 5, comprenant en outre :
l'affichage séquentiel de la trajectoire de mouvement du pointeur par l'intermédiaire du second écran de verrouillage après l'affichage du pointeur.
